# EUROPEAN PATENT APPLICATION

(11) **EP 4 209 974 A1**
(43) Date of publication of application: **12.07.2023**
(21) Application number: 22192541.5
(22) Date of filing: 29.08.2022
(51) Int. Cl.: G06Q 10/00, G06Q 10/06, G06Q 10/0633, G06Q 10/067

(54) **INFORMATION PROCESSING APPARATUS, PROGRAM, AND METHOD FOR PROCESSING INFORMATION**

(30) Priority: 07.01.2022 JP 2022001817
(71) Applicant: Fujifilm Business Innovation Corp., Tokyo 107-0052 (JP)
(72) Inventor: FUNATSU, Akira, Yokohama (JP)
(74) Representative: Meissner Bolte Partnerschaft mbB

(57) **Abstract**

An information processing apparatus includes a processor configured to receive, in a case where an active period of a first workflow, which starts in accordance with a predetermined operation, is received from a user, a second workflow to be performed after the active period ends from the user and perform the second workflow after the active period.

## Description

### Background

### (i) Technical Field

The present disclosure relates to an information processing apparatus, a program, and a method for processing information

### (ii) Related Art

Japanese Unexamined Patent Application Publication No. 2008-310710 discloses an information processing apparatus that controls a workflow of a job whose transition path is defined by organization information. The information processing apparatus is capable of allowing workflows of a plurality of versions of an organization including new and old versions, to coexist and changing a version of the organization of an ongoing workflow at will between new and old versions.

The information processing apparatus includes organization information storing means for storing organization information of a plurality of versions by holding, for each of records of the organization information, version identification information for identifying one or more versions with which the record becomes valid and version valid period information storing means for storing time information for identifying a period in which each of the one or more versions becomes valid.

The information processing apparatus also includes version confirmation means for confirming version identification information on the basis of information for confirming a version of the organization information to be associated with the job, the version being specified when the job is created, and associating the version identification information with the job and workflow progression means for determining a transition destination of the job on the basis of the version identification information associated with the job and progressing the workflow by causing the job to transition to the determined transition destination.

The information processing apparatus also includes reconfirmation means for reconfirming, if a request to replace the organization information associated with the job, version identification information to be associated with the job on the basis of information for confirming a version of organization information to be associated with the job specified by the request.

### Summary

With the techniques disclosed in Japanese Unexamined Patent Application Publication No. 2008-310710, however, a user needs to select, when an active period of a workflow ends, another workflow to be performed after the end of the active period.

Accordingly, it is an object of the present disclosure to provide an information processing apparatus, a program, and a method for processing information capable of performing, when an active period of a workflow ends, another workflow to be performed after the end of the active period without a user selecting the other workflow.

According to a first aspect of the present disclosure, there is provided an information processing apparatus including a processor configured to receive, in a case where an active period of a first workflow, which starts in accordance with a predetermined operation, is received from a user, a second workflow to be performed after the active period ends from the user and perform the second workflow after the active period.

According to a second aspect of the present disclosure, there is provided the information processing apparatus according to the first aspect, in which the second workflow is different from the first workflow in terms of at least whole configuration, a trigger, or a process to be performed.

According to a third aspect of the present disclosure, there is provided the information processing apparatus according to the first or second aspect, in which the processor is configured to notify, at least once during a predetermined notification period including a time at which the active period of the first workflow ends, a user of the first workflow that the active period of the first workflow will end.

According to a fourth aspect of the present disclosure, there is provided the information processing apparatus according to the third aspect, in which a time of notification precedes an end of the active period.

According to a fifth aspect of the present disclosure, there is provided the information processing apparatus according to any one of the first to fourth aspects, in which the processor is configured to receive, as the second workflow, a selected one of a plurality of workflows created in advance or a new workflow.

According to a sixth aspect of the present disclosure, there is provided the information processing apparatus according to any one of the first to fifth aspects, in which the processor is configured to display, on a same screen, the first workflow and a difference between the first workflow and the second workflow.

According to a seventh aspect of the present disclosure, there is provided the information processing apparatus according to the sixth aspect, in which the difference is information indicating that processing in the first workflow which is not performed in the second workflow is to be bypassed.

According to an eighth aspect of the present disclosure, there is provided a program causing a computer to execute a process for processing information, the process including receiving, in a case where an active period of a first workflow, which starts in accordance with a predetermined operation, is received from a user, a second workflow to be performed after the active period ends from the user and performing the second workflow after the active period.

According to a ninth aspect of the present disclosure, there is provided a program causing a computer to execute a process for processing information, the process including displaying, on a same screen, a screen for receiving, from a user, an active period of a first workflow, which starts in accordance with a predetermined operation, and a screen for receiving, from the user, a second workflow to be performed after the active period ends.

According to a tenth aspect of the present disclosure, there is provided a method for processing information, the method including receiving, in a case where an active period of a first workflow, which starts in accordance with a predetermined operation, is received from a user, a second workflow to be performed after the active period ends from the user and performing the second workflow after the active period.

According to the first, eighth, ninth, and tenth aspects of the present disclosure, a workflow to be performed after an active period of a previous workflow can be performed without a user selecting the workflow at the end of the active period of the previous workflow.

According to the second aspect, a workflow different from the first workflow in terms of at least whole configuration, a trigger, or a process to be performed can be applied as the second workflow.

According to the third aspect, an end of a workflow can be notified of.

According to the fourth aspect, an end of a workflow can be notified of in advance.

According to the fifth aspect, when a selected one of a plurality of workflows is received, the second workflow can be received more efficiently than when a new workflow is received, and when a new workflow is received, a new workflow can be received as the second workflow.

According to the sixth aspect, changes in a workflow after an active period can be easily recognized compared to when a difference is not displayed.

According to the seventh aspect, changes in a workflow after an active period can be recognized easily and more intuitively compared to when information indicating bypassing is not displayed.

### Brief Description of the Drawings

Exemplary embodiments of the present disclosure will be described in detail based on the following figures, wherein:
Fig. 1 is a block diagram illustrating an example of the configuration of an information processing system according to a first exemplary embodiment;
Fig. 2 is a block diagram illustrating an example of the hardware configuration of terminal apparatuses according to exemplary embodiments;
Fig. 3 is a block diagram illustrating an example of the functional configuration of the terminal apparatuses according to the exemplary embodiments;
Fig. 4 is a schematic diagram illustrating an example of the configuration of a workflow management database according to the exemplary embodiments;
Fig. 5 is a flowchart illustrating an example of first information processing according to the first exemplary embodiment;
Fig. 6 is a diagram illustrating an example of a workflow selection screen according to the exemplary embodiments;
Fig. 7 is a diagram illustrating an example of a workflow setting screen according to the first exemplary embodiment;
Fig. 8 is a diagram illustrating an example of a menu screen according to the first exemplary embodiment;
Fig. 9 is a diagram illustrating another example of the workflow setting screen according to the first exemplary embodiment;
Fig. 10 is a diagram illustrating another example of the menu screen according to the first exemplary embodiment;
Fig. 11 is a diagram illustrating another example of the workflow selection screen according to the first exemplary embodiment;
Fig. 12 is a diagram illustrating another example of the workflow setting screen according to the first exemplary embodiment;
Fig. 13 is a flowchart illustrating an example of second information processing according to the first exemplary embodiment;
Fig. 14 is a block diagram illustrating an example of the configuration of an information processing system according to a second exemplary embodiment;
Fig. 15 is a schematic diagram illustrating an example of the configuration of a trigger management database according to the second exemplary embodiment;
Fig. 16 is a schematic diagram illustrating an example of the configuration of a task management database according to the second exemplary embodiment;
Fig. 17 is a flowchart illustrating an example of first information processing according to the second exemplary embodiment;
Fig. 18 is a diagram illustrating an example of a workflow setting screen according to the second exemplary embodiment;
Fig. 19 is a diagram illustrating an example of a trigger menu screen according to the second exemplary embodiment;
Fig. 20 is a diagram illustrating another example of the workflow setting screen according to the second exemplary embodiment;
Fig. 21 is a diagram illustrating an example of a task menu screen according to the second exemplary embodiment;
Fig. 22 is a diagram illustrating another example of the workflow setting screen according to the second exemplary embodiment;
Fig. 23 is a diagram illustrating another example of the workflow setting screen according to the second exemplary embodiment;
Fig. 24 is a diagram illustrating another example of the workflow setting screen according to the second exemplary embodiment; and
Fig. 25 is a flowchart illustrating an example of second information processing according to the second exemplary embodiment.

### Detailed Description

Exemplary embodiments of the present disclosure will be described in detail hereinafter with reference to the drawings. In the exemplary embodiments, each of processes included in a workflow in the present disclosure will be referred to as a "task". A "workflow" according to the exemplary embodiments refers to a "procedure or a set of operations that cooperate in accordance with an operation performed by a user". A specific example of the "operation performed by a user" is an operation performed on at least a folder or document information. The operation performed by a user corresponds to a trigger.

Specific examples of the trigger include copying, movement, deletion, locking, and unlocking of an electronic file corresponding to the document information and copying, creation, movement, deletion, name change, and restoration of the folder and manual start. The "manual start" herein refers to an event where a user manually starts a workflow for a selected folder.

In a task, actions, which are processing performed by a central processing unit (CPU) after a trigger is detected, are collectively managed. In a notification task, for example, the CPU transmits a message to one or more specified users, receives, from each of the one or more users, a notification indicating completion of an operation, and proceeds to a next result. In an approval task, for example, the CPU transmits a message to one or more specified users, receives, from each of the one or more users, approval or rejection, and proceeds to a next result.

### First Exemplary Embodiment

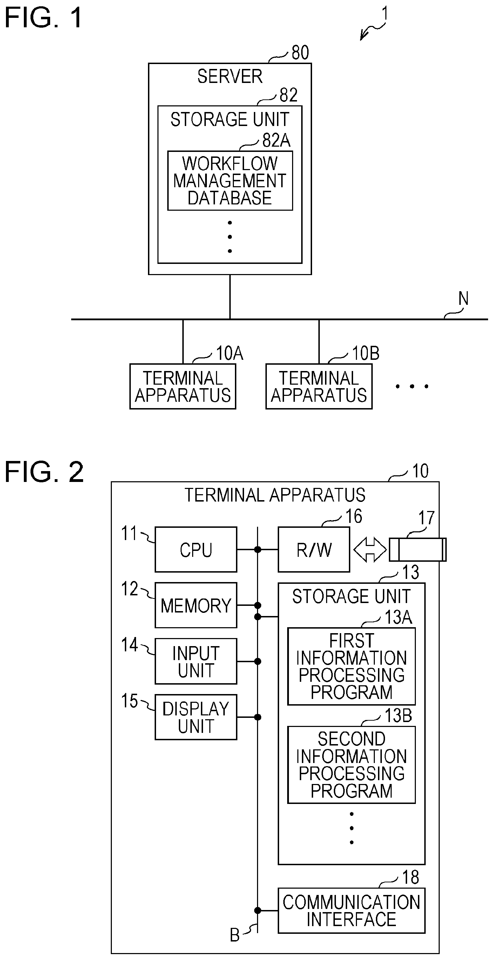

First, the configuration of an information processing system 1 according to a first exemplary embodiment will be described with reference to Fig. 1. Fig. 1 is a block diagram illustrating an example of the configuration of the information processing system 1 according to the present exemplary embodiment.

As illustrated in Fig. 1, the information processing system 1 according to the present exemplary embodiment includes terminal apparatuses 10A, 10B, and so on, each of which is an information processing apparatus in the present disclosure, and a server 80. The terminal apparatuses 10A, 10B, and so on will be simply referred to as "terminal apparatuses 10" hereinafter when not distinguished from one another.

Examples of the terminal apparatuses 10 and the server 80 include various stationary computers such as personal computers and server computers. The terminal apparatuses 10, however, are not limited to this, and may be various mobile information processing apparatuses such as smartphones, tablet terminals, or mobile information terminals, instead.

The terminal apparatuses 10 and the server 80 are connected to each other over a network N and can communicate with each other over the network N. Although the network N is a public communication network such as the Internet or a telephone network in the present exemplary embodiment, the network N is not limited to this. For example, the network N may be an inhouse communication network such as a local area network (LAN) or a wide area network (WAN), or a combination of an inhouse communication network and a public communication network. Although the network N is a wired communication network in the present exemplary embodiment, the network N is not limited to this. A wireless communication network or a combination of a wired communication network and a wireless communication network may be used, instead.

As illustrated in Fig. 1, the server 80 according to the present exemplary embodiment includes a storage unit 82, which stores a workflow management database 82A. The storage unit 82 is implemented as a hard disk drive (HDD), a solid-state drive (SSD), a flash memory, or the like. Details of the workflow management database 82A will be described later.

The terminal apparatuses 10 according to the present exemplary embodiment, on the other hand, are used by persons who perform a trigger and tasks included in a workflow (hereinafter referred to as "performers").

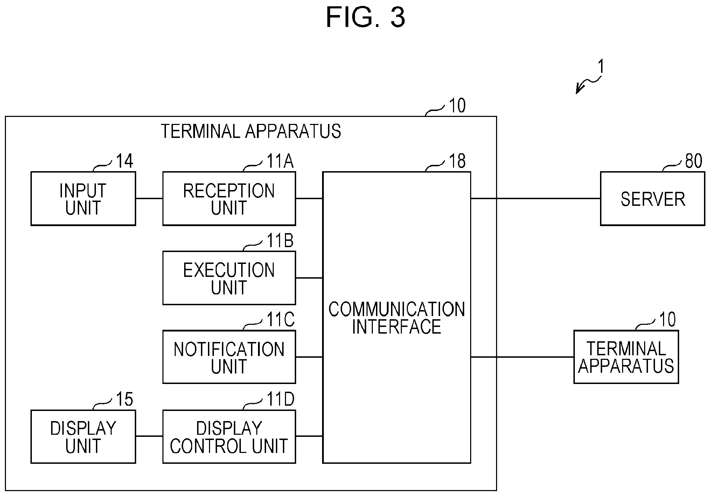

Next, the configuration of the terminal apparatuses 10 according to the present exemplary embodiment will be described with reference to Figs. 2 and 3. Fig. 2 is a block diagram illustrating an example of the hardware configuration of the terminal apparatuses 10 according to the present exemplary embodiment. Fig. 3 is a block diagram illustrating an example of the functional configuration of the terminal apparatuses 10 according to the present exemplary embodiment.

As illustrated in Fig. 2, the terminal apparatuses 10 according to the present exemplary embodiment each include a CPU 11 as a processor, a memory 12 as a temporary storage area, a nonvolatile storage unit 13, an input unit 14 such as a keyboard and a mouse, a display unit 15 such as a liquid crystal display, a medium reading/writing device (R/W) 16, and a communication interface 18. The CPU 11, the memory 12, the storage unit 13, the input unit 14, the display unit 15, the medium reading/writing device 16, and the communication interface 18 are connected to one another through a bus B. The medium reading/writing device 16 reads information written in a storage medium 17 and writes information to the storage medium 17.

The storage unit 13 according to the present exemplary embodiment is implemented as an HDD, an SSD, a flash memory, or the like. The storage unit 13 as a storage medium stores a first information processing program 13A and a second information processing program 13B.

The first information processing program 13A is stored (installed) in the storage unit 13 when the storage medium 17 in which the first information processing program 13A is written is connected to the medium reading/writing device 16 and the medium reading/writing device 16 reads the first information processing program 13A from the storage medium 17. The second information processing program 13B is stored (installed) in the storage unit 13 when the storage medium 17 in which the second information processing program 13B is written is connected to the medium reading/writing device 16 and the medium reading/writing device 16 reads the second information processing program 13B from the storage medium 17. The CPU 11 reads the first information processing program 13A or the second information processing program 13B from the storage unit 13 as necessary, loads the first information processing program 13A and the second information processing program 13B into the memory 12, and sequentially performs processes included in the first information processing program 13A or the second information processing program 13B.

Next, the functional configuration of the terminal apparatuses 10 according to the present exemplary embodiment will be described with reference to Fig. 3. As illustrated in Fig. 3, the terminal apparatuses 10 each include a reception unit 11A, an execution unit 11B, a notification unit 11C, and a display control unit 11D. The CPU 11 of each of the terminal apparatuses 10 functions as the reception unit 11A, the execution unit 11B, the notification unit 11C, and the display control unit 11D by executing the first information processing program 13A or the second information processing program 13B.

The reception unit 11A according to the present exemplary embodiment receives, when receiving an active period of a first workflow, which starts in accordance with a predetermined operation, from a user, a second workflow to be performed after the active period of the first workflow ends.

Although the user from whom the reception unit 11A receives the second workflow is a predetermined manager (a person authorized to edit the workflow) among performers who perform a trigger and tasks included in the workflow in the present exemplary embodiment, the user from whom the reception unit 11A receives the second workflow is not limited to this. For example, the user may be a performer other than the manager, a manager who is not among the performers, a creator of the workflow, or the like, instead. In the present exemplary embodiment, the second workflow is different from the first workflow in terms of whole configuration.

The execution unit 11B according to the present exemplary embodiment performs the second workflow after the active period.

The notification unit 11C according to the present exemplary embodiment notifies, at least once during a predetermined notification period including a time at which the active period ends, users of the first workflow that the active period of the first workflow will end. Although a time of the notification precedes the time at which the active period ends in the present exemplary embodiment, the time of the notification is not limited to this. For example, the time of the notification may be the time at which the active period ends or a time after the active period ends, instead.

The reception unit 11A according to the present exemplary embodiment receives, as the second workflow, a selected one of workflows created in advance or a new workflow.

The display control unit 11D according to the present exemplary embodiment displays the first workflow and a difference between the first workflow and the second workflow on the same screen. In the present exemplary embodiment, the difference is information indicating processing in the second workflow that is not performed in the first workflow and information indicating that processing in the first workflow that is not performed in the second workflow is to be bypassed.

The display control unit 11D according to the present exemplary embodiment displays, on the same screen, a screen for receiving, from the user, the active period of the first workflow and a screen for receiving, from the user, the second workflow to be performed after the active period ends.

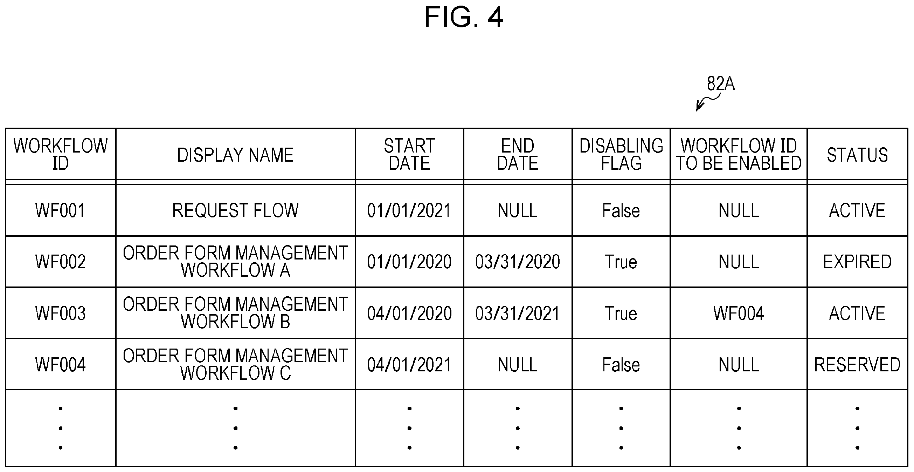

Next, the workflow management database 82A according to the present exemplary embodiment will be described with reference to Fig. 4. Fig. 4 is a schematic diagram illustrating an example of the configuration of the workflow management database 82A according to the present exemplary embodiment.

Information regarding workflows is registered in the workflow management database 82A according to the present exemplary embodiment. In the workflow management database 82A according to the present exemplary embodiment, as illustrated in Fig. 4 as an example, a workflow identifier (ID), a display name, a start date, an end date, a disabling flag, a workflow ID to be enabled, and a status are associated with one another.

The workflow ID is unique information given to each of workflows in order to individually identify the workflow. The display name is information indicating a name of a corresponding workflow when the workflow is displayed. The start date is information indicating a start date of an active period of a corresponding workflow. The end date is information indicating an end date of an active period of a corresponding workflow. In the present exemplary embodiment, an end date of an application period is not specified for a workflow that does not have an end. In this case, "NULL" is stored as the end date of the active period. Information indicating an end date, however, is not limited to this.

The disabling flag is information indicating whether to disable a corresponding workflow after an active period of the workflow. In the present exemplary embodiment, the disabling flag is "False", which indicates that a corresponding workflow is not to be disabled, or "True", which indicates that a corresponding workflow is to be disabled. Information indicating the disabling flag, however, is not limited to these.

The workflow ID to be enabled is information indicating a workflow ID of a workflow to be enabled after an active period of a corresponding workflow.

The status is information indicating a status of a corresponding workflow. In the present exemplary embodiment, the status is "EXPIRED", which indicates that an active period of a corresponding workflow has ended, "ACTIVE", which indicates that a corresponding workflow is currently active, or "RESERVED", which indicates that a corresponding workflow will be enabled in the future. Information indicating the status, however, is not limited to these.

It is indicated in the example illustrated in Fig. 4 that a workflow to which a workflow ID "WF001" is given has been used since January 1, 2021. It is also indicated in the example illustrated in Fig. 4 that a workflow to which a workflow ID "WF002" is given was used from January 1, 2020 to March 31, 2020.

It is also indicated in the example illustrated in Fig. 4 that a workflow to which a workflow ID "WF003" is given will be used from April 1, 2020 to March 31, 2021 and that a workflow to which a workflow ID "WF004" is given will be enabled after the active period of the workflow whose workflow ID is "WF003" ends.

It is also indicated in the example illustrated in Fig. 4 that the workflow to which the workflow ID "WF004" is given will be used from April 1, 2021 and that no end date is specified for the workflow.

Although not illustrated, the workflow management database 82A according to the present exemplary embodiment also stores a trigger and tasks included in each of the registered workflows.

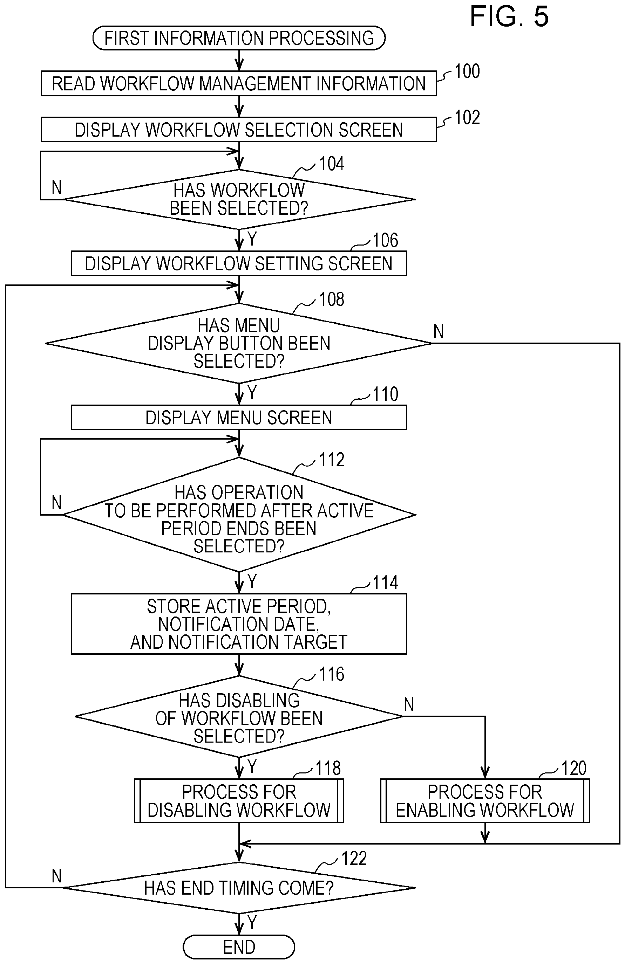

Next, operations at a time when the terminal apparatus 10, which plays a central role in the information processing system 1, performs first information processing will be described with reference to Fig. 5 as operations of the information processing system 1 according to the present exemplary embodiment. Fig. 5 is a flowchart illustrating an example of the first information processing according to the present exemplary embodiment.

In the information processing system 1 according to the present exemplary embodiment, when the manager sets information regarding an active period of a created workflow, the manager inputs an instruction to start the first information processing using the input unit 14. The first information processing is performed when the CPU 11 of the terminal apparatus 10 executes the first information processing program 13A after the manager inputs the instruction. Here, a case where information such as an active period is set only for a workflow will be described in order to avoid complexity. In addition, here, a case where the workflow management database 82A has already been constructed in a default state will be described in order to avoid complexity.

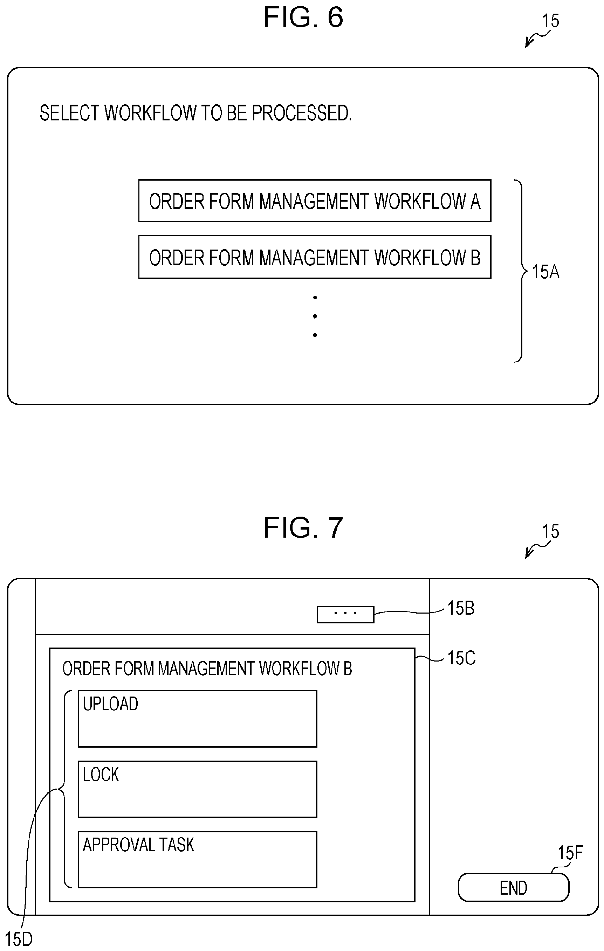

In step 100 illustrated in Fig. 5, the CPU 11 reads all information (hereinafter referred to as "workflow management information") from the workflow management database 82A. In step 102, the CPU 11 controls, using information indicating the display names included in the read workflow management information, the display unit 15 such that the display unit 15 displays a workflow selection screen having a predetermined configuration. Fig. 6 illustrates an example of the workflow selection screen according to the present exemplary embodiment.

As illustrated in Fig. 6, a message for prompting the manager to select a workflow to be processed is displayed in the workflow selection screen according to the present exemplary embodiment. Workflow selection buttons 15A, which individually indicate the display names included in the read workflow management information, are also displayed in the workflow selection screen according to the present exemplary embodiment.

After the workflow selection screen is displayed, the manager selects one of the workflow selection buttons 15A corresponding to the name of the workflow to be processed. In step 104, therefore, the CPU 11 waits until one of the workflow selection buttons 15A is selected. The workflow corresponding to the workflow selection button 15A selected by the manager here will be referred to as a "target workflow".

In step 106, the CPU 11 controls the display unit 15 such that the display unit 15 displays, using information regarding the target workflow included in the read workflow management information, a workflow setting screen having a predetermined configuration. Fig. 7 illustrates an example of the workflow setting screen according to the present exemplary embodiment.

As illustrated in Fig. 7, a menu display button 15B selected when information regarding an active period of the displayed target flow is to be set is displayed in the workflow setting screen according to the present exemplary embodiment. In the workflow setting screen according to the present exemplary embodiment, a display area 15C for displaying a trigger and tasks included in the target workflow is also displayed, and information 15D indicating the trigger and the tasks is individually displayed in the display area 15C in order of execution.

After the workflow setting screen is displayed, the manager selects the menu display button 15B using the input unit 14 if the manager desires to set the information regarding the active period of the displayed target workflow. If the manager desires to end the setting for the target workflow, the manager selects an end button 15F using the input unit 14.

In step 108, therefore, the CPU 11 determines whether the menu display button 15B has been selected. If a result of step 108 is negative, the first information processing proceeds to step 122. If the result of step 110 is positive, the first information processing proceeds to step 110.

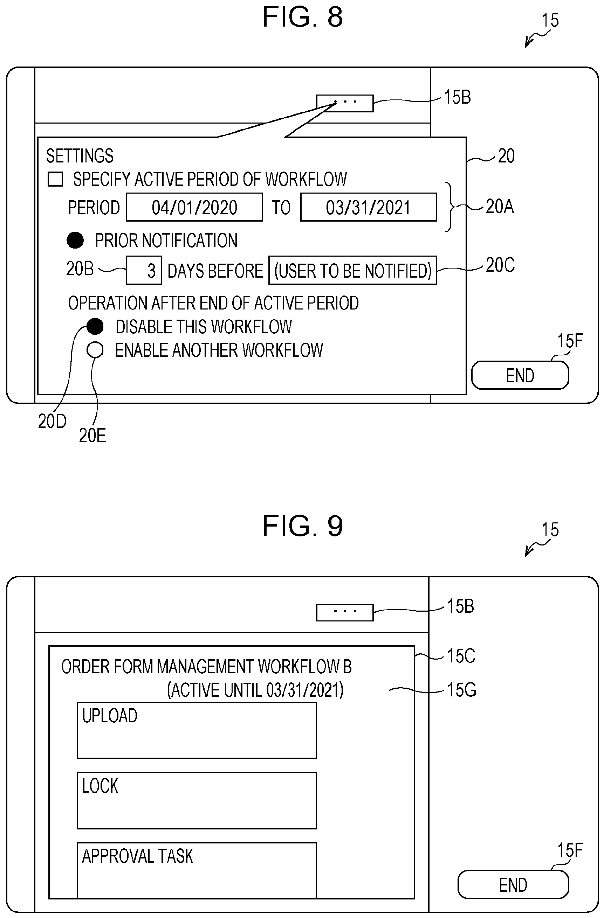

In step 110, the CPU 11 controls the display unit 15 such that the display unit 15 displays a menu screen having a predetermined configuration. Fig. 8 illustrates an example of a menu screen 20 according to the present exemplary embodiment.

As illustrated in Fig. 8, the menu screen 20 according to the present exemplary embodiment appears from the menu display button 15B as a pop-up window. An active period setting area 20A for setting the active period of the target workflow is displayed in the menu screen 20 according to the present exemplary embodiment. A notification date setting area 20B for setting a date that precedes an end date of the active period and on which information regarding an end of the target workflow (hereinafter referred to as "end information") is notified of and a notification target setting area 20C for setting a target of the notification (hereinafter referred to as a "notification target") are also displayed in the menu screen 20 according to the present exemplary embodiment. Furthermore, a disabling button 20D selected when the target workflow is to be disabled as an operation performed after the end of the active period and an enabling button 20E selected when another workflow is to be enabled are also displayed in the menu screen 20 according to the present exemplary embodiment. The target workflow corresponds to the first workflow in the present disclosure, and the other workflow corresponds to the second workflow in the present disclosure.

After the menu screen 20 is displayed, the manager inputs, using the input unit 14, a start date and the end date of the active period of the target workflow in the active period setting area 20A. If the target workflow does not have an end, the manager inputs only the start date.

The manager also inputs, using the input unit 14, a date on which the end information is notified of (hereinafter referred to as a "notification date") in the notification date setting area 20B and the notification target in the notification target setting area 20C. The manager then selects, using the input unit 14, the disabling button 20D if the manager desires to disable the target workflow as the operation performed after the end of the active period of the target workflow or the enabling button 20E if the manager desires to enable another workflow.

In step 112, therefore, the CPU 11 waits until the disabling button 20D or the enabling button 20E is selected. In step 114, the CPU 11 stores the information indicating the active period input in the menu screen 20 in a corresponding storage area of the workflow management database 82A. If the end date of the active period is not input at this time, "NULL" is stored as information indicating the end date as described above. In step 114, the CPU 11 also stores the notification date input in the notification date setting area 20B and the notification target input in the notification target setting area 20C in the storage unit 82 of the server 80 while associating these pieces of information with the target workflow.

In step 116, the CPU 11 determines whether the manager has selected disabling of the target workflow by determining whether the disabling button 20D has been selected in the menu screen 20. If a result of step 116 is positive, the first information processing proceeds to step 118.

In step 118, the CPU 11 performs a process for disabling a workflow, which is processing relating to the disabling of the target workflow. The first information processing then proceeds to step 122.

That is, as illustrated in Fig. 9 as an example, the CPU 11 displays, in the process for disabling a workflow, active period information 15G indicating the end date of the active period of the target workflow in the display area 15C of the workflow setting screen.

The CPU 11 also stores, as illustrated in Fig. 4 as an example, information indicating disabling ("True" in the present exemplary embodiment) in the workflow management database 82A as a disabling flag of the target workflow in the process for disabling a workflow.

If the result of step 116 is negative, on the other hand, the first information processing proceeds to step 120 while assuming that the enabling button 20E has been selected in the menu screen 20, that is, the manager has selected enabling of another workflow. In step 120, the CPU 11 performs a process for enabling a workflow, which is processing relating to the enabling of the other workflow, and the first information processing then proceeds to step 122.

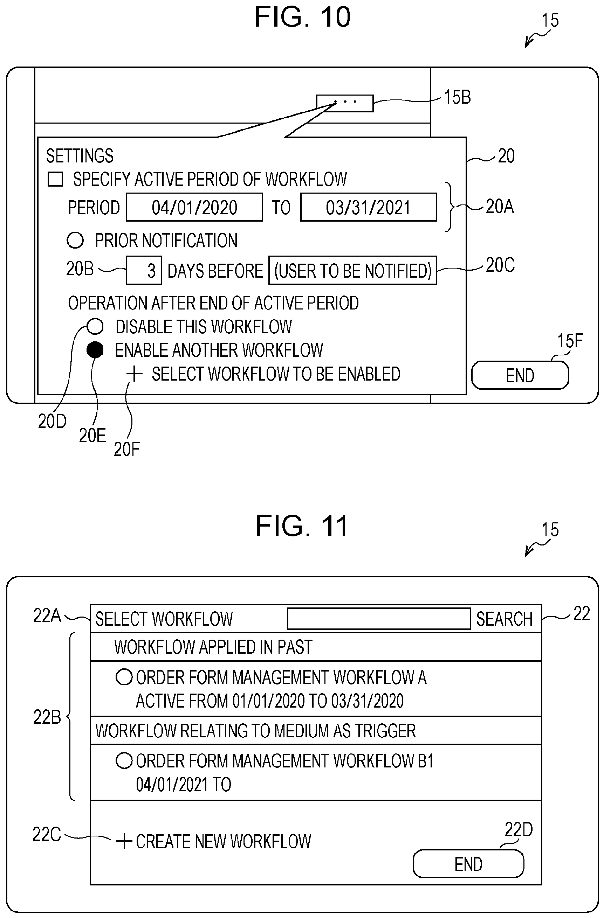

Fig. 10 illustrates another example of the menu screen 20 according to the present exemplary embodiment at a time when the enabling of the other workflow has been selected.

As illustrated in Fig. 10, in the process for enabling a workflow according to the present exemplary embodiment, first, a workflow selection button 20F for selecting a workflow to be enabled is displayed. After the workflow selection button 20F is displayed, the manager selects the workflow selection button 20F using the input unit 14.

If the workflow selection button 20F is selected, the CPU 11 controls the display unit 15 such that the display unit 15 displays a workflow selection screen having a predetermined configuration in the process for enabling a workflow. Fig. 11 illustrates an example of a workflow selection screen 22 according to the present exemplary embodiment.

As illustrated in Fig. 11, the workflow selection screen 22 according to the present exemplary embodiment includes a search area 22A for searching for another workflow. The workflow selection screen 22 according to the present exemplary embodiment also includes a selection area 22B for selecting a workflow applied in the past and a creation button 22C selected when a new workflow is created. As illustrated in Fig. 11, a workflow applied in the past and the like are displayed in the selection area 22B.

When the manager desires to search for another workflow after the workflow selection screen 22 is displayed, the manager searches for another workflow in the search area 22A using the input unit 14. When the manager desires to use one of workflows and the like applied in the past, the manager selects a display area of the workflow in the selection area 22B. When the manager desires to create a new workflow, the manager selects the creation button 22C using the input unit 14 and then creates a new workflow for replacing the target workflow after the active period of the target workflow ends.

When the manager has searched for another workflow, selected a workflow, or created a new workflow, the CPU 11 stores, as illustrated in Fig. 4 as an example, a workflow ID of the other workflow in the workflow management database 82A as the workflow ID to be enabled of the target workflow in the process for enabling a workflow.

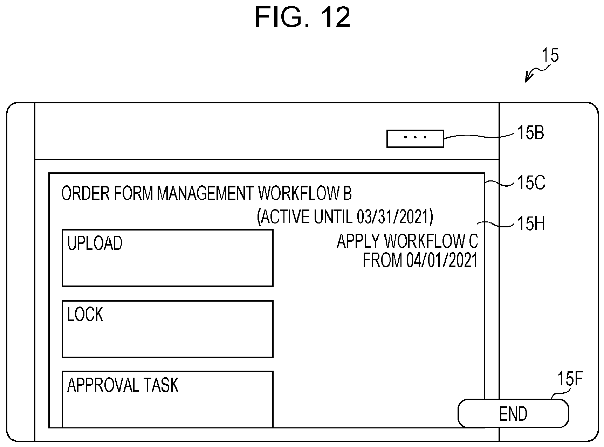

The CPU 11 also controls the display unit 15 such that the display unit 15 displays, as illustrated in Fig. 12 as an example, information 15H indicating the other workflow to be applied after the active period of the target workflow in the display area 15C of the workflow setting screen along with information indicating a start date of the application of the other workflow in the process for enabling a workflow.

In step 122, the CPU 11 determines whether a time to end the first information processing has come by determining whether the manager has selected the end button 15F. If a result of step 122 is negative, the CPU 11 causes the first information processing to return to step 108, and if the result of step 122 is positive, the CPU 11 ends the first information processing.

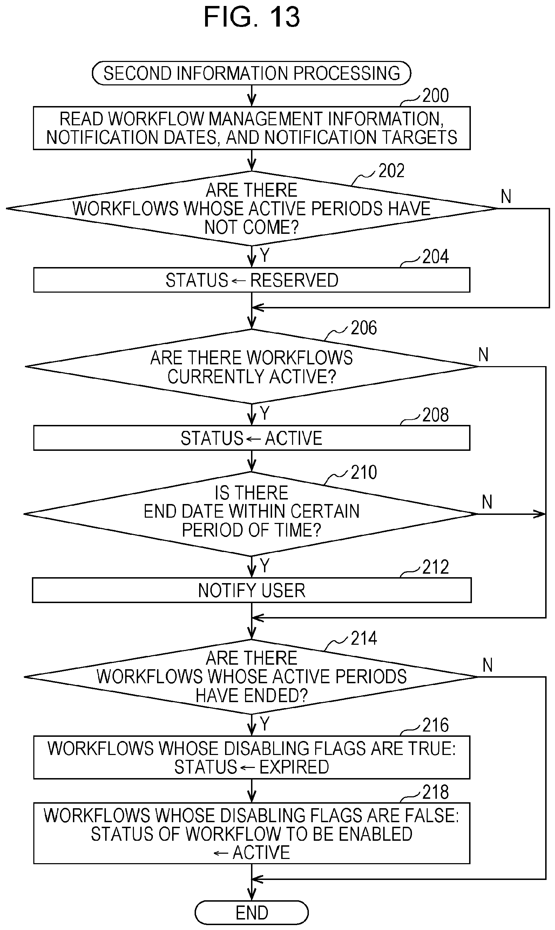

Next, operations at a time when the terminal apparatuses 10 performs second information processing will be described with reference to Fig. 13. Fig. 13 is a flowchart illustrating an example of the second information processing according to the present exemplary embodiment.

The second information processing according to the present exemplary embodiment is performed when the CPU 11 of a predetermined terminal apparatus 10 (a terminal apparatus 10 used by the manager in the present exemplary embodiment) executes, while each workflow is being operated, the second information processing program 13B at predetermined time intervals (one day in the present exemplary embodiment) in order to manage the progress of the workflow.

In step 200 illustrated in Fig. 13, the CPU 11 reads all the information (workflow management information) from the workflow management database 82A and information indicating notification dates and notification targets from the storage unit 82 of the server 80. In step 202, the CPU 11 determines whether the read workflow management information includes workflows whose active periods have not come. If a result of step 202 is negative, the second information processing proceeds to step 206. If the result of step 202 is positive, the second information processing proceeds to step 204.

In step 204, the CPU 11 updates the workflow management database 82A such that statuses of the workflows that have been found in step 202 and whose active periods have not come become "RESERVED". The second information processing then proceeds to step 206.

In step 206, the CPU 11 determines whether the read workflow management information includes workflows that are currently active. If a result of step 206 is negative, the second information processing proceeds to step 214. If the result of step 206 is positive, the second information processing proceeds to step 208.

In step 208, the CPU 11 updates the workflow management database 82A such that statuses of the workflows that have been found in step 206 and that are currently active (hereinafter referred to as "in-period workflows") become "ACTIVE". In step 210, the CPU 11 determines whether the in-period workflows include one whose notification date has come. If a result of step 210 is negative, the second information processing proceeds to step 214. If the result of step 210 is positive, the second information processing proceeds to step 212.

In step 212, the CPU 11 transmits, to a notification target corresponding to the in-period workflow found in step 210, information (corresponds to the notification information) indicating that an end date of an active period of the in-period workflow is approaching. The second information processing then proceeds to step 214. Although the information is transmitted via an email over the network N in the present exemplary embodiment, the information need not be transmitted via an email. For example, the information may be transmitted using a tool other than an email, such as +message (registered trademark), LINE (registered trademark), or any other messaging service, instead.

In step 214, the CPU 11 determines whether the read workflow management information includes workflows whose active periods have ended. If a result of step 214 is negative, the second information processing ends. If the result of step 214 is positive, the second information processing proceeds to step 216.

In step 216, the CPU 11 updates the workflow management database 82A such that statuses of workflows that have been found in step 214, whose active periods have ended (hereinafter referred to as "post-period workflows"), and whose disabling flags are "True" become "EXPIRED".

In step 218, the CPU 11 updates the workflow management database 82A such that statuses of workflows corresponding to workflow IDs to be enabled of, among the post-period workflows, workflows whose disabling flags are "False" become "ACTIVE". The second information processing then ends.

As a result of the second information processing, statuses in the workflow management database 82A are updated to latest states.

After an active period of a workflow (corresponds to the first workflow) for which the active period has been set, the CPU 11 of the terminal apparatus 10 according to the present exemplary embodiment performs, using the information registered in the workflow management database 82A, a workflow (corresponds to the second workflow) selected when the active period has been set.

A specific example of a situation where the information processing system 1 according to the present exemplary embodiment is operated is a case where a workflow needs to be changed at a time of organizational changes within a company.

When organizational changes are to be made within a company, for example, a manager sets an active period (time limit) of a workflow currently in use. In this case, when the time limit comes, the workflow is disabled.

If it is found that names and members of departments are will changed as a result of the organizational changes within the company, for example, the manager creates a workflow that suits the organizational changes by copying the existing workflow or creating a new workflow. The manager then selects a workflow to be enabled after the active period of the workflow currently in use. In this case, when the time limit comes, the workflow created by the manager comes into use (is enabled).

More specifically, in the case of a workflow in which an approval task by a person in charge of making orders is triggered by uploading of an order form to an order form management folder by a salesperson, the workflow is used until a date on which organizations (departments, team membership, etc.) within the company are changed.

A department in charge of making orders and a department for managing orders are then integrated together as a result of the organization changes. Because the workflow needs to be changed a lot, a new workflow is created. The new workflow is enabled on a day after the date on which the organizations within the company are changed.

### Second Exemplary Embodiment

In the first exemplary embodiment, an example of a case where the second workflow is different from the first workflow in terms of whole configuration has been described. In a second exemplary embodiment, an example of a case where the second workflow is different from the first workflow in terms of at least a trigger or tasks will be described.

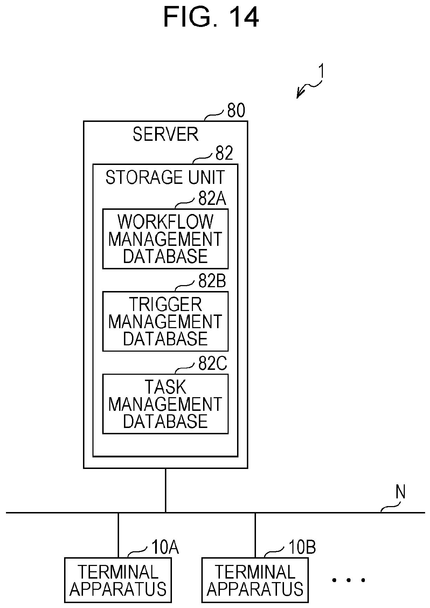

First, the configuration of an information processing system 1 according to the present exemplary embodiment will be described with reference to Fig. 14. Fig. 14 is a block diagram illustrating an example of the configuration of the information processing system 1 according to the present exemplary embodiment. The same components as those of the information processing system 1 according to the first exemplary embodiment illustrated in Fig. 1 are given the same reference numerals as in Fig. 1, and description thereof is omitted.

The information processing system 1 according to the present exemplary embodiment is different from that according to the first exemplary embodiment in that a trigger management database 82B and a task management database 82C are also registered in the storage unit 82 of the server 80.

Terminal apparatuses 10 according to the present exemplary embodiment are the same as those according to the first exemplary embodiment except that processing performed in the first information processing program 13A and the second information processing program 13B are different from that in the first exemplary embodiment and that at least the trigger or the tasks included in the second workflow are different from those included in the first workflow.

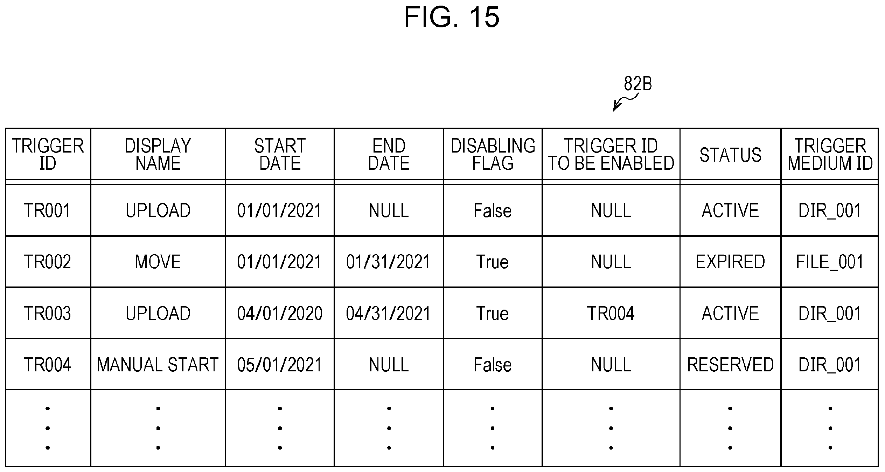

Next, the trigger management database 82B according to the present exemplary embodiment will be described with reference to Fig. 15. Fig. 15 is a schematic diagram illustrating an example of the configuration of the trigger management database 82B according to the present exemplary embodiment.

Information regarding triggers are registered in the trigger management database 82B according to the present exemplary embodiment. As illustrated in Fig. 15 as an example, a trigger ID, a display name, a start date, an end date, a disabling flag, a trigger ID to be enabled, a status, and a trigger medium ID are associated with one another in the trigger management database 82B according to the present exemplary embodiment.

The trigger ID is unique information given in advance to a corresponding one of the triggers in order to individually identify the trigger. The display name is information indicating a name of a corresponding trigger when the trigger is displayed. The start date is information indicating a state date of an active period of a corresponding trigger. The end date is information indicating an end date of an active period of a corresponding trigger. In the present exemplary embodiment, an end date of an active period is not specified for a trigger that does not have an end. In this case, "NULL" is stored as the end date of the active period. Information indicating an end date, however, is not limited to this.

The disabling flag is information indicating whether to disable a corresponding trigger after an active period of the trigger. In the present exemplary embodiment, the disabling flag is "False", which indicates that a corresponding trigger is not to be disabled, or "True", which indicates that a corresponding trigger is to be disabled. Information indicating the disabling flag, however, is not limited to these.

The trigger ID to be enabled is information indicating a trigger ID of a trigger to be enabled after an active period of a corresponding trigger.

The status is information indicating a status of a corresponding trigger. In the present exemplary embodiment, the status is "EXPIRED", which indicates that an active period of a corresponding trigger has ended, "ACTIVE", which indicates that a corresponding trigger is currently active, or "RESERVED", which indicates that a corresponding trigger will be enabled in the future. Information indicating the status, however, is not limited to these.

The trigger medium ID is information indicating an ID for individually identifying a medium (an electronic file or a folder) that serves as a trigger. "DIR XXX" indicates a folder, and "FILE XXX" indicates an electronic file.

It is indicated in the example illustrated in Fig. 15 that a trigger to which a trigger ID "TR001" is given has been used since January 1, 2021 and that the trigger is a folder. It is also indicated in the example illustrated in Fig. 15 that a trigger to which a trigger ID "TR002" is given was used from January 1, 2021 to January 31, 2021 and that the trigger was an electronic file.

It is also indicated in the example illustrated in Fig. 15 that a trigger to which a trigger ID "TR003" is given will be used from April 1, 2020 to April 31, 2021 and that a trigger to which a trigger ID "TR004" is given is to be enabled after an end of the active period.

It is also indicated in the example illustrated in Fig. 15 that the trigger to which the trigger ID "TR004" is given will be used from May 1, 2021 and that no end date has been specified for the trigger.

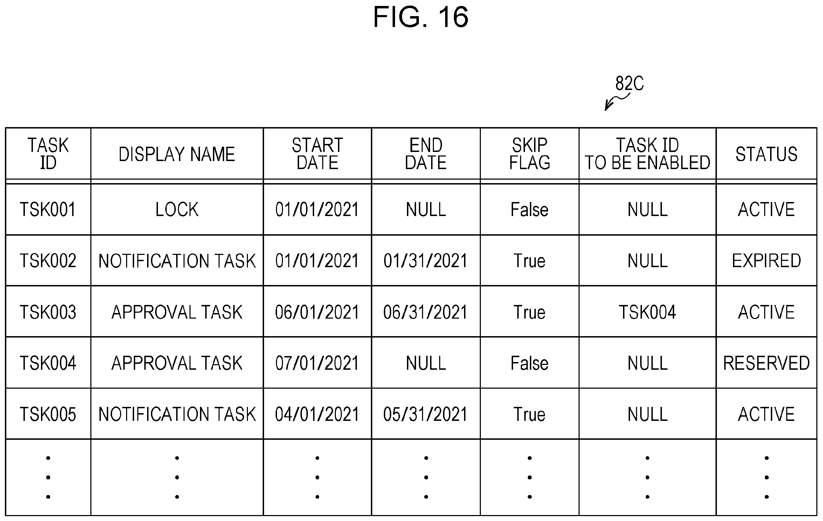

Next, the task management database 82C according to the present exemplary embodiment will be described with reference to Fig. 16. Fig. 16 is a schematic diagram illustrating an example of the configuration of the task management database 82C according to the present exemplary embodiment.

Information regarding tasks is registered in the task management database 82C according to the present exemplary embodiment. As illustrated in Fig. 16 as an example, a task ID, a display name, a start date, an end date, a skip flag, a task ID to be enabled, and a status are associated with one another in the task management database 82C according to the present exemplary embodiment.

The task ID is unique information given in advance to a corresponding one of tasks in order to individually identify the task. The display name is information indicating a name of a corresponding task when the task is displayed. The start date is information indicating a state date of an active period of a corresponding task. The end date is information indicating an end date of an active period of a corresponding task. In the present exemplary embodiment, an end date of an active period is not specified for a task that does not have an end. In this case, "NULL" is stored as the end date of the active period. Information indicating an end date, however, is not limited to this.

The skip flag is information indicating whether to skip a corresponding task after an active period of the task and proceed to a next task. In the present exemplary embodiment, the skip flag is "False", which indicates that a corresponding task is not to be skipped, or "True", which indicates that a corresponding task is to be skipped. Information indicating the skip flag, however, is not limited to these.

The task ID to be enabled is information indicating a task ID of a task to be enabled after an active period of a corresponding task.

The status is information indicating a status of a corresponding task. In the present exemplary embodiment, the status is "EXPIRED", which indicates that an active period of a corresponding task has ended, "ACTIVE", which indicates that a corresponding task is currently active, and "RESERVED", which indicates that a corresponding task will be enabled in the future. Information indicating the status, however, is not limited to these.

It is indicated in the example illustrated in Fig. 16 that a task to which a task ID "TSK001" is given has been used since January 1, 2021. It is also indicated in the example illustrated in Fig. 16 that a task to which a task ID "TSK002" is given was used from January 1, 2021 to January 31, 2021.

It is also indicated in the example illustrated in Fig. 16 that a task to which a task ID "TSK003" is given will be used from June 1, 2021 to June 31, 2021 and that a task to which a task ID "TSK004" is given is to be enabled after an end of this active period.

It is also indicated in the example illustrated in Fig. 16 that the task to which the task ID "TSK004" is given will be used from July 1, 2021 and that no end date has been specified for the trigger. It is also indicated in the example illustrated in Fig. 16 that a task to which a task ID "TSK005" is given will be used from April 1, 2021 to May 31, 2021 and that the task is to be skipped after an end of the active period thereof.

Although not illustrated in Figs. 15 and 16 in order to avoid complexity, the illustrated information is registered in each of the databases for each of the workflows registered in the workflow management database 82A.

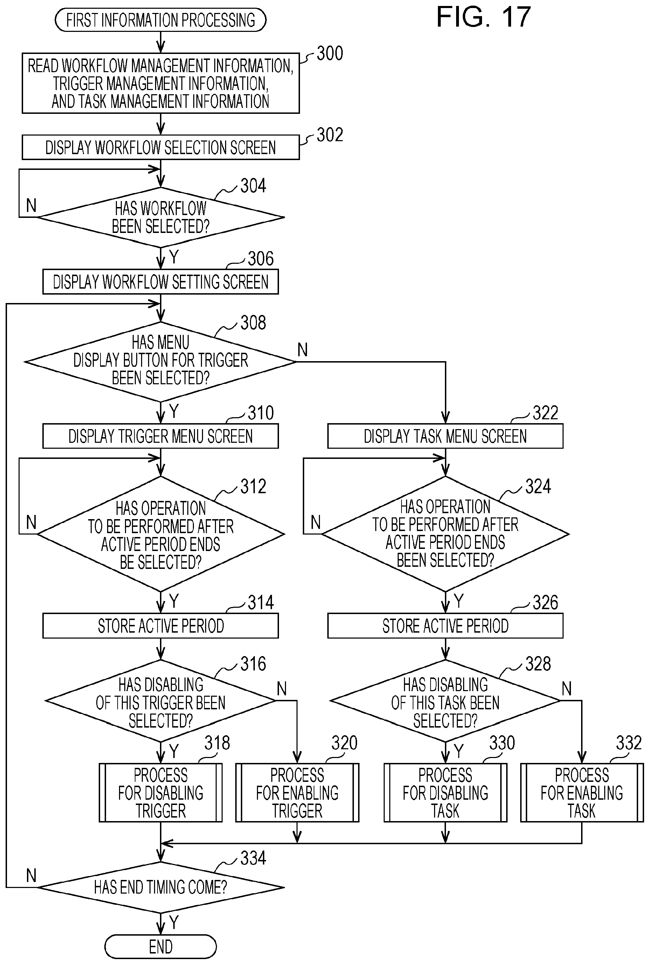

Next, operations at a time when the terminal apparatus 10, which plays a central role in the information processing system 1, performs first information processing will be described with reference to Fig. 17 as operations of the information processing system 1 according to the present exemplary embodiment. Fig. 17 is a flowchart illustrating an example of the first information processing according to the present exemplary embodiment.

In the information processing system 1 according to the present exemplary embodiment, when the manager sets information regarding an active period of at least a trigger or a task included in a created workflow, the manager inputs an instruction to start the first information processing using the input unit 14. The first information processing is performed when the CPU 11 of the terminal apparatus 10 executes the first information processing program 13A after the manager inputs the instruction. A case where the workflow management database 82A, the trigger management database 82B, and the task management database 82C have been constructed in a default state will be described here in order to avoid complexity.

In step 300 illustrated in Fig. 17, the CPU 11 reads all the information (workflow management information) from the workflow management database 82A. In step 300, the CPU 11 also reads all information (hereinafter referred to as "trigger management information") from the trigger management database 82B. In step 300, the CPU 11 also reads all information (hereinafter referred to as "task management information") from the task management database 82C.

In step 302, as in step 102 of the first information processing according to the first exemplary embodiment, the CPU 11 controls the display unit 15 such that the display unit 15 displays the workflow selection screen (refer to Fig. 6) using information indicating display names included in the read workflow management information.

After the workflow selection screen is displayed, the manager selects, using the input unit 14, a workflow selection buttons 15A indicating a name of a workflow to be processed (target workflow). In step 304, therefore, the CPU 11 waits until one of workflow selection buttons 15A is selected.

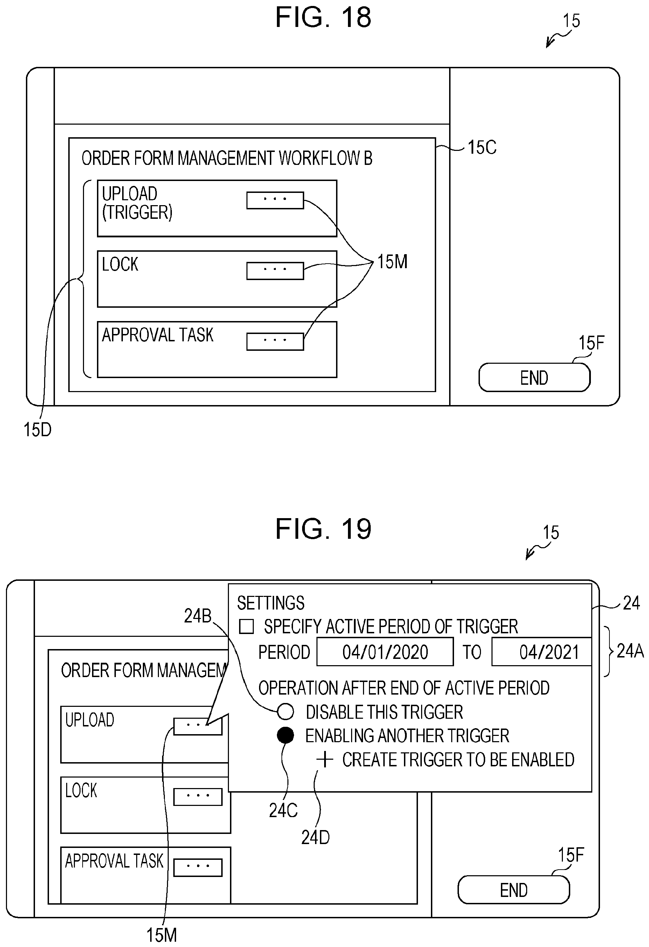

In step 306, the CPU 11 controls the display unit 15 such that the display unit 15 displays a workflow setting screen having a predetermined configuration using information regarding the target workflow included in read trigger management information and task management information. Fig. 18 illustrates an example of the workflow setting screen according to the present exemplary embodiment.

As illustrated in Fig. 18, the workflow setting screen according to the present exemplary embodiment has substantially the same configuration as that according to the first exemplary embodiment (refer to Fig. 7). In the workflow setting screen according to the present exemplary embodiment, however, menu display buttons 15M for displaying menu screens corresponding to a trigger and tasks are displayed for the trigger and the tasks indicated by the information 15D instead of the menu display button 15B corresponding to the target workflow. In the example illustrated in Fig. 18, "upload" is a trigger.

If the manager desires to set information regarding an active period of a displayed trigger or task after the workflow setting screen is displayed, the manager selects a corresponding menu display button 15M using the input unit 14. If the manager desires to end the setting of a displayed trigger or task, the manager selects the end button 15F using the input unit 14.

In step 308, therefore, the CPU 11 determines whether a menu display button 15M corresponding to the trigger has been selected. If a result of step 308 is positive, the first information processing proceeds to step 310.

In step 310, the CPU 11 controls the display unit 15 such that the display unit 15 displays a trigger menu screen having a predetermined configuration. Fig. 19 illustrates an example of a trigger menu screen 24 according to the present exemplary embodiment.

As illustrated in Fig. 19, the trigger menu screen 24 according to the present exemplary embodiment appears from the menu display button 15M corresponding to the selected trigger as a pop-up window. The trigger menu screen 24 according to the present exemplary embodiment includes an active period setting area 24A for setting an active period of the corresponding trigger. The trigger menu screen 24 also includes a disabling button 24B selected when the selected trigger is to be disabled as an operation performed after an end of the active period and an enabling button 24C selected when another trigger is to be enabled.

After the trigger menu screen 24 is displayed, the manager inputs a start date and an end date of the active period of the selected trigger in the active period setting area 24A using the input unit 14. If the selected trigger does not have an end, the manager inputs only the start date.

If the manager desires to disable the selected trigger as an operation performed after the end of the active period of the selected trigger, the manager selects the disabling button 24B using the input unit 14. If the manager desires to enable another trigger, the manager selects the enabling button 24C.

In step 312, therefore, the CPU 11 waits until the disabling button 24B or the enabling button 24C is selected. In step 314, the CPU 11 stores information indicating the active period input in the trigger menu screen 24 in a corresponding storage area of the trigger management database 82B. If the end date is not input for the active period at this time, "NULL" is stored as information indicating the end date.

In step 316, the CPU 11 determines whether the manager has selected disabling of the selected trigger by determining whether the disabling button 24B has been selected in the trigger menu screen 24. If a result of step 316 is positive, the first information processing proceeds to step 318.

In step 318, the CPU 11 performs a process for disabling a trigger, which is processing relating to the disabling of the selected trigger. The first information processing then proceeds to step 334.

That is, the CPU 11 stores, as illustrated in Fig. 15 as an example, information ("True" in the present exemplary embodiment) indicating disabling in the trigger management database 82B as the disabling flag of the selected trigger in the process for disabling a trigger.

If the result of step 316 is negative, on the other hand, the first information processing proceeds to step 320 while assuming that the enabling button 24C has been selected in the trigger menu screen 24, that is, the manager has selecting enabling of another trigger. In step 320, the 311 performs a process for enabling a trigger, which is processing relating to the enabling of another trigger. The first information processing then proceeds to step 334.

As illustrated in Fig. 19, first, the CPU 11 controls the display unit 15 such that the display unit 15 displays a trigger creation button 24D, which is selected when a trigger to be enabled is to be created, in the trigger menu screen 24 in the process for enabling a trigger according to the present exemplary embodiment. After the trigger creation button 24D is displayed, the manager selects the trigger creation button 24D using the input unit 14.

When the trigger creation button 24D is selected, the CPU 11 controls the display unit 15 such that the display unit 15 displays a trigger creation screen (not illustrated) having a predetermined configuration in the process for enabling a trigger.

After the trigger creation screen is displayed, the manager creates, using the trigger creation screen, a new trigger for replacing the selected trigger after the active period of the selected trigger ends.

After the manager finishes creating a new trigger, the CPU 11 gives a new trigger ID to the created trigger and, as illustrated in Fig. 15 as an example, stores the new trigger ID in the trigger management database 82B as the trigger ID to be enabled of the selected trigger in the process for enabling a trigger.

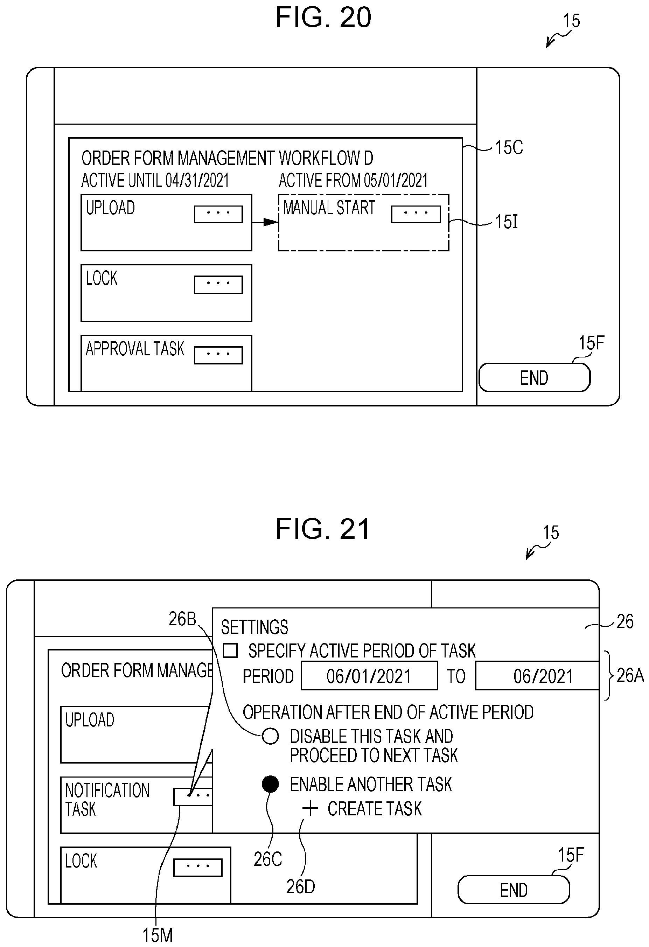

The CPU 11 also controls the display unit 15 such that the display unit 15 displays, as illustrated in Fig. 20 as an example, trigger information 151 indicating the new trigger to be applied after the active period of the selected trigger in the display area 15C of the workflow setting screen along with a time at which the new trigger replaces the selected trigger in the process for enabling a trigger.

If the result of step 308 is negative, on the other hand, the first information processing proceeds to step 322 while assuming that the manager has selected a menu display button 15M corresponding to a task.

In step 322, the CPU 11 controls the display unit 15 such that the display unit 15 displays a task menu screen having a predetermined configuration. Fig. 21 illustrates an example of a task menu screen 26 according to the present exemplary embodiment.

As illustrated in Fig. 21, the task menu screen 26 according to the present exemplary embodiment appears from the menu display button 15M corresponding to the selected task as a pop-up window. The task menu screen 26 according to the present exemplary embodiment includes an active period setting area 26A for setting an active period of a corresponding task. The task menu screen 26 according to the present exemplary embodiment also includes a disabling button 26B selected when the selected task is to be disabled and a workflow is to proceed to a next task as an operation performed after an end of the active period and an enabling button 26C selected when another task is to be enabled.

After the task menu screen 26 is displayed, the manager inputs a start date and an end date of the active period of the selected task in the active period setting area 26A using the input unit 14. If the selected task does not have an end, the manager inputs only the start date.

If the manager desires to disable the selected task and proceed to the next task as an operation performed after the end of the active period of the selected task, the manager selects the disabling button 26B using the input unit 14.
If the manager desires to enabling another task, the manager selects the enabling button 26C.

In step 324, therefore, the CPU 11 waits until the disabling button 26B or the enabling button 26C is selected. In step 326, the CPU 11 stores information indicating the active period input in the task menu screen 26 in a corresponding storage area of the task management database 82C. If the end date of the active period has not been input at this time, "NULL" is stored as information indicating the end date.

In step 328, the CPU 11 determines whether the manager has selected the disabling of the selected task and the proceeding to the next task by determining whether the disabling button 26B has been selected in the task menu screen 26. If a result of step 328 is positive, the first information processing proceeds to step 330.

In step 330, the CPU 11 performs a process for disabling a task, which is processing relating to the disabling of the selected task. The first information processing then proceeds to step 334.

That is, the CPU 11 stores, as illustrated in Fig. 16 as an example, information ("True" in the present exemplary embodiment) indicating a skip in the task management database 82C as a skip flag of the selected task in the process for disabling a task.

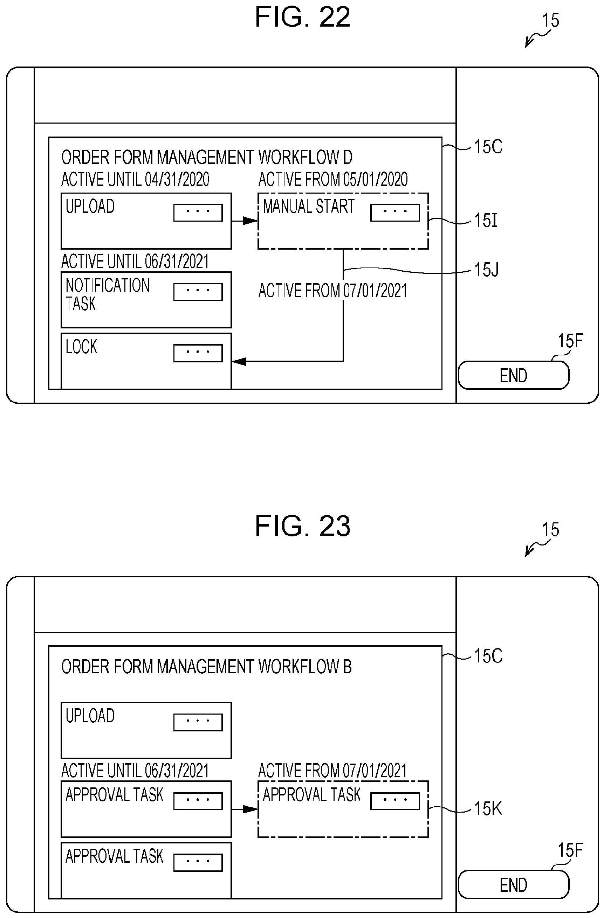

The CPU 11 also controls the display unit 15 such that the display unit 15 displays, as illustrated in Fig. 22 as an example, information (an arrow in an example illustrated in Fig. 22) 15J indicating that the selected task ("notification task" in the example illustrated in Fig. 22) is to be bypassed in the process for disabling a task. Fig. 22 illustrates an example of a state in a case where a trigger is to be also replaced by another trigger.

If the result of step 328 is negative, on the other hand, the first information processing proceeds to step 332 while assuming that the enabling button 26C has been selected in the task menu screen 26, that is, the manager has selected the enabling of another task. In step 332, the CPU 11 performs a process for enabling a task, which is processing relating to the enabling of another task. The first information processing then proceeds to step 334.

As illustrated in Fig. 21, first, the CPU 11 controls the display unit 15 such that the display unit 15 displays a task creation button 26D, which is selected when a task to be enabled is to be created, in the task menu screen 26 in the process for enabling a task according to the present exemplary embodiment. After the task creation button 26D is displayed, the manager selects the task creation button 26D using the input unit 14.

When the task creation button 26D is selected, the CPU 11 controls the display unit 15 such that the display unit 15 displays a task creation screen (not illustrated) having a predetermined configuration in the process for enabling a task.

After the task creation screen is displayed, the manager creates, using the task creation screen, a new task for replacing the selected task after the end of the active period of the selected task.

After the manager finishes creating a new task, the CPU 11 gives a new task ID to the created task and, as illustrated in Fig. 16 as an example, stores the new task ID in the task management database 82C as a task ID to be enabled of the selected task in the process for enabling a task.

The CPU 11 also controls the display unit 15 such that the display unit 15 displays, as illustrated in Fig. 23 as an example, task information 15K indicating the new task to be applied after the active period of the selected task in the display area 15C of the workflow setting screen along with information indicating a time at which the new task replaces the selected task in the process for enabling a task.

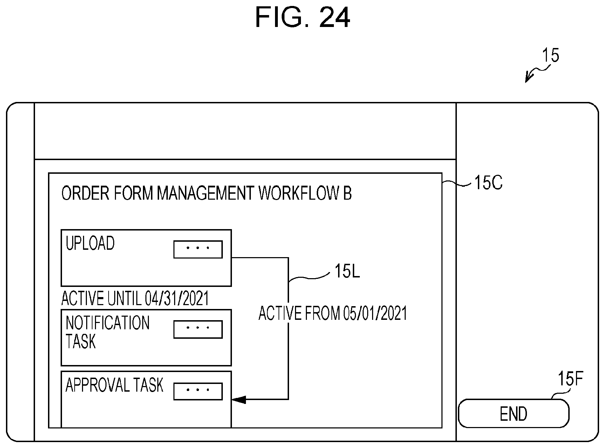

Although Fig. 23 illustrates an example where an approver desires to set a temporary approval task to be performed by a substitute approver and replace an original approval task with the temporary approval task because of an extended leave, information to be displayed is not limited to this. As illustrated in Fig. 24 as an example, when a person desires to set a task for temporary contact ("notification task" in the example illustrated in Fig. 24), the CPU 11 may control the display unit 15 such that the display unit 15 displays information (an arrow in the example illustrated in Fig. 24) 15L indicating that the task is to be bypassed.

In step 334, the CPU 11 determines whether a time to end the first information processing has come by determining whether the manager has selected the end button 15F. If a result of step 334 is negative, the CPU 11 causes the first information processing to return to step 308. If the result of step 334 is positive, the CPU 11 ends the first information processing.

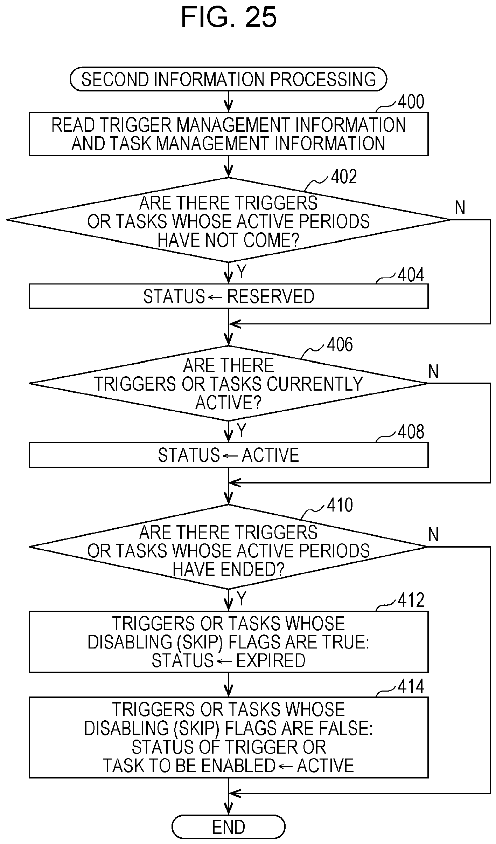

Next, operations at a time when the terminal apparatus 10 performs second information processing will be described with reference to Fig. 25. Fig. 25 is a flowchart illustrating an example of the second information processing according to the present exemplary embodiment.

The second information processing according to the present exemplary embodiment is performed when the CPU 11 of a predetermined terminal apparatus 10 (the terminal apparatus 10 used by the manager in the present exemplary embodiment) executes, while each workflow is being operated, the second information processing program 13B at predetermined time intervals (one day in the present exemplary embodiment) in order to manage the progress of the workflow.

In step 400 illustrated in Fig. 25, the CPU 11 reads all the information (trigger management information) from the trigger management database 82B and all the information from the task management database 82C. In step 402, the CPU 11 determines whether the read trigger management information and task management information include at least triggers or tasks whose active periods have not come. If a result of step 402 is negative, the second information processing proceeds to step 406. If the result of step 402 is positive, the second information processing proceeds to step 404.

In step 404, if having determined in step 402 that triggers whose active periods have not come are included, the CPU 11 updates the trigger management database 82B such that statuses of the triggers become "RESERVED". In step 404, if having determined in step 402 that tasks whose active periods have not come are included, the CPU 11 updates the task management database 82C such that statuses of the tasks become "RESERVED".

In step 406, the CPU 11 determines whether the read trigger management information and task management information include at least triggers or tasks that are currently active. If a result of step 406 is negative, the second information processing proceeds to step 410. If the result of step 406 is positive, the second information processing proceeds to step 408.

In step 408, if having determined in step 406 that triggers that are currently active are included, the CPU 11 updates the trigger management database 82B such that statuses of the triggers become "ACTIVE". In step 408, if having determined in step 406 that tasks that are currently active are included, the CPU 11 updates the task management database 82C such that statuses of the tasks become "ACTIVE".

In step 410, the CPU 11 determines whether the read trigger management information and task management information include at least triggers or tasks whose active periods have ended. If a result of step 410 is negative, the second information processing ends. If the result of step 410 is positive, the second information processing proceeds to step 412.

In step 412, if having determined in step 410 that triggers whose active periods have ended are included, the CPU 11 updates the trigger management database 82B such that statuses of triggers whose disabling flags are "True" become "EXPIRED". In step 412, if having determined in step 410 that tasks whose active periods have ended are included, the CPU 11 updates the task management database 82C such that statuses of task whose slip flags are "True" becomes "EXPIRED".

In step 414, if having determined in step 410 that triggers whose active periods have ended are included, the CPU 11 updates the trigger management database 82B such that statuses of triggers corresponding to trigger IDs to be enabled of foregoing triggers whose disabling flags are "False" become "ACTIVE". In step 412, if having determined in step 410 that tasks whose active periods have ended are included, the CPU 11 updates the task management database 82C such that statuses of tasks corresponding to task IDs to be enabled of foregoing tasks whose skip flags are "False" become "ACTIVE". The second information processing then ends.

As a result of the second information processing, statuses in the trigger management database 82B and the task management database 82C are updated to latest states.

After an end of an active period of a trigger or a task for which the active period has been set, the CPU 11 of the terminal apparatus 10 according to the present exemplary embodiment performs, using the information registered in the trigger management database 82B or the task management database 82C, another trigger or another task selected when the active period has been set.

A specific example of a situation where the information processing system 1 according to the present exemplary embodiment is implemented will be described.

A manager had constructed a workflow such that the workflow automatically proceeded using uploading of an order form to an order form management folder as a trigger, but because there were incorrect uploading and errors in documents after the uploading during actual operations, the manager changed an operation method for the workflow to one in which "manual start" by a salesperson served as a trigger.

Because salespersons accustomed to the previous operation method, however, might still think that the workflow automatically proceeded by uploading an order form, the manager planned to provide a period for notifying of the change to the operation method.

The manager also planned to notify, in a next task during the period, the salespersons that "manual start" is necessary after the uploading and, after an end of the period, skip the notification task.

In this case, the manager sets an active period for a trigger of the workflow and creates and sets another trigger to be enabled after an end of the active period.

The manager also sets the notification task as a task after the uploading, sets an active period for the notification task, and makes settings such that the notification task is skipped after the active period.

Although the terminal apparatus 10 performs the first information processing and the second information processing in each of the above exemplary embodiments, the terminal apparatuses 10 need not perform the first information processing and the second information processing. For example, the server 80 may perform the first information processing and the second information processing, instead. Alternatively, the terminal apparatus 10 or the server 80 may perform the first information processing and the other of the terminal apparatus 10 and the server 80 may perform the second information processing.

Although a workflow is replaced in the first exemplary embodiment and at least triggers or tasks are replaced in the second exemplary embodiment, items to be replaced are not limited to this. For example, a mode in which the first and second exemplary embodiments are combined together, that is, a mode in which at least a workflow, triggers, or tasks are replaced, may be employed.

In addition, although the various databases are registered in the server 80 in each of the above exemplary embodiments, an apparatus in which the various databases are registered is not limited to this. For example, the various databases may be registered in one of the terminal apparatuses 10 or an apparatus other than the server 80 accessible from the terminal apparatuses 10, instead.

In addition, although a new trigger or task is created when another trigger or task is to be enabled in the second exemplary embodiment, a new trigger or task need not be created. For example, another trigger or task may be enabled by selecting a trigger or a task enabled in the past, instead.

In addition, although a trigger is a first task performed in a workflow in the second exemplary embodiment, a trigger is not limited to this. For example, a trigger may be a second or later task performed in a workflow, instead.

Although the exemplary embodiments have been described, the technical scope of the present disclosure is not limited to the exemplary embodiments. The exemplary embodiments may be modified or improved in various ways without deviating from the spirit of the present disclosure, and the technical scope of the present disclosure also includes such modifications and improvements.

In addition, the above exemplary embodiments are not intended to limit the claims, and not every combination of the features described in the exemplary embodiments is necessary for the techniques proposed in the present disclosure. The above-described exemplary embodiments include ideas at various stages, and various ideas are extracted on the basis of combinations of a plurality of disclosed elements. Even if some elements are removed from all the elements described in the exemplary embodiments, a configuration without the removed elements can be extracted as an idea, insofar as an effect is produced.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

Furthermore, although the first information processing and the second information processing are achieved by a software configuration by executing a program using a computer in the above exemplary embodiments, the present disclosure is not limited to this. For example, the first information processing and the second information processing may be achieved by a hardware configuration or a combination of a hardware configuration and a software configuration, instead.

The configuration of the terminal apparatuses 10 described in the above exemplary embodiments is an example, and it is needless to say that unnecessary parts may be removed or new parts may be added without deviating from the spirit of the present disclosure.

In addition, the procedure of each of the processes described in the above exemplary embodiments is an example, and it is needless to say that unnecessary steps may be removed, new steps may be added, or order of the step may be changed without deviating from the spirit of the present disclosure.

In the embodiments above, the term "processor" refers to hardware in a broad sense. Examples of the processor include general processors (e.g., CPU) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

## Claims

1. An information processing apparatus comprising:
a processor configured to:
receive, in a case where an active period of a first workflow, which starts in accordance with a predetermined operation, is received from a user, a second workflow to be performed after the active period ends from the user; and
perform the second workflow after the active period.

2. The information processing apparatus according to Claim 1,
wherein the second workflow is different from the first workflow in terms of at least whole configuration, a trigger, or a process to be performed.

3. The information processing apparatus according to Claim 1 or 2,
wherein the processor is configured to notify, at least once during a predetermined notification period including a time at which the active period of the first workflow ends, a user of the first workflow that the active period of the first workflow will end.

4. The information processing apparatus according to Claim 3,
wherein a time of notification precedes an end of the active period.

5. The information processing apparatus according to any one of Claims 1 to 4,
wherein the processor is configured to receive, as the second workflow, a selected one of a plurality of workflows created in advance or a new workflow.

6. The information processing apparatus according to any one of Claims 1 to 5,
wherein the processor is configured to display, on a same screen, the first workflow and a difference between the first workflow and the second workflow.

7. The information processing apparatus according to Claim 6,
wherein the difference is information indicating that processing in the first workflow which is not performed in the second workflow is to be bypassed.

8. A program causing a computer to execute a process for processing information, the process comprising:
receiving, in a case where an active period of a first workflow, which starts in accordance with a predetermined operation, is received from a user, a second workflow to be performed after the active period ends from the user; and
performing the second workflow after the active period.

9. A program causing a computer to execute a process for processing information, the process comprising:
displaying, on a same screen, a screen for receiving, from a user, an active period of a first workflow, which starts in accordance with a predetermined operation, and a screen for receiving, from the user, a second workflow to be performed after the active period ends.

10. A method for processing information, the method comprising:
receiving, in a case where an active period of a first workflow, which starts in accordance with a predetermined operation, is received from a user, a second workflow to be performed after the active period ends from the user; and
performing the second workflow after the active period.
